# FASCICULE DE BREVET EUROPEEN

(11) **EP 2 218 576 B1**
(45) Date de publication et mention de la délivrance du brevet: **07.09.2011**
(21) Numéro de dépôt: 10290051.1
(22) Date de dépôt: 04.02.2010
(51) Int. Cl.: B32B 1/08, B32B 27/08, B32B 27/30, B32B 27/40, F16L 11/04, F16L 11/08

(54) **Tuyau flexible en matière plastique notamment pour le transport d'eau potable ou d'un fluide alimentaire**
Flexibler Plastikschlauch, insbesondere zum Transport von Trinkwasser oder flüssigen Nahrungsmitteln
Flexible hose made from plastic material, in particular for transporting drinking water or an edible fluid

(30) Priorité: 16.02.2009 FR 0900691
(43) Date de publication de la demande: 18.08.2010
(73) Titulaire: Hozelock Tricoflex, 92563 Rueil Malmaison Cedex (FR)
(72) Inventeur: Pinoit, Dominique, 51300 Pringy (FR); Carpentier, Fabien, 51300 Lisse en Champagne (FR)
(74) Mandataire: Robert, Jean-Pierre

(56) Documents cités:
- EP-A- 1 870 235
- WO-A-00/32974
- US-B1- 6 227 249
- DATABASE WPI Week 199333 Thomson Scientific, London, GB; AN 1993-261293 XP002536578 & JP 05 177771 A (ASAHI GLASS CO LTD) 20 juillet 1993 (1993-07-20)

## Description

La présente invention a trait au domaine des tuyaux flexibles multicouches pour le transport de fluides, ces tuyaux pouvant notamment être raccordés à des installations de distribution d'eau potable.

L'invention concerne plus particulièrement un tuyau en matière plastique pour le transport d'eau potable ou d'un fluide alimentaire. Toutefois bien que prévu pour une telle application le tuyau pourra être utilisé pour le transport de fluides non alimentaires ou non destinés à la consommation mais nécessitant une résistance chimique au niveau de la surface interne du tuyau et notamment le tuyau pourra être utilisé dans des applications médicales, pharmaceutiques ou industrielles.

On connaît des tuyaux réalisés en matériau thermoplastique et permettant de résister aux agressions chimiques permettant une utilisation à des fins alimentaires de ces tuyaux. Plus précisément ces tuyaux sont réalisés à partir d'une seule couche de thermoplastique fluorée, le tétrafluoropolyéthymene (PTFE) ou encore le polyfluorure de vynilidène (PVDF). Ces tuyaux flexibles mono-matières, présentent, pour des questions de procédés de fabrication, des diamètres inférieurs à 25 mm. Par ailleurs ces tubes présentent, pour des questions de flexibilité, des épaisseurs faibles, notamment de l'ordre du millimètre. Ce type de tuyau est très couteux à fabriquer compte tenu du prix élevé des thermoplastiques fluorés et est par conséquent réservé à des applications spécifiques. L'absence de diamètre supérieur à 25mm est un handicap. Les performances de tenue en pression pour ces tubes mono-matières étant faibles, on leur adjoint pour certaines applications un renfort de type tressage. Ce renfort est déposé en reprise après l'extrusion du tube mono matière fluorée. Ce type de renfort a l'inconvénient d'être un processus lent et coûteux en raison de la quantité importante de renfort déposé. Il a par contre l'avantage de donner à ces tubes mono matière des performances de tenue en pression et température de haut niveau. En conclusion, sur le marché des tubes mono matières en thermoplastiques fluorés, on trouve deux types de produit, les produits sans renfort aux performances très limitées et ceux avec renfort aux performances très élevées, ces deux types de produit n'étant disponible toutefois que pour des diamètres inférieurs à 25mm.

On connaît également des tuyaux multicouches réalisés avec une couche externe en élastomère et présentant une couche interne, de faible épaisseur, résistante aux agressions chimiques. Ces tuyaux ont une couche intérieure réalisée à partir de FEP, d'ETFE ou de PFA dont les points de fusion sont élevés et respectivement de 260, 270 et 310°C. Ce type de réalisation ne peut être étendu au domaine des tuyaux comportant une couche extérieure en PVC. En effet, il n'est pas envisageable de coextruder une matière fluorée dont le point de fusion est supérieur à la température de dégradation du PVC à savoir de l'ordre de 200°C. Par ailleurs les tuyaux ayant une composante élastomère répondent de manière satisfaisante à des besoins précis auxquels ils sont généralement réservés tels que la souplesse à froid ou encore la tenue en température.

### OBJET DE L'INVENTION

La présente invention a ainsi pour but de proposer un tuyau en matière plastique adapté au transport d'eau potable ou d'un fluide alimentaire et dont la structure en matière plastique permet la fabrication de tuyau selon des gammes de diamètres étendues et assurant une très bonne résistance chimique.

### RESUME DE L'INVENTION

A cet effet la présente invention concerne un tuyau flexible en matière plastique notamment pour le transport d'eau potable ou d'un fluide alimentaire comportant au moins trois couches dont une couche intermédiaire, comportant majoritairement du polychlorure de vinyle (PVC), une couche de liaison en polyuréthane thermoplastique (TPU) et une couche intérieure, ladite couche intérieure étant une couche de résine thermoplastique fluorée d'une épaisseur comprise entre 100 et 500µm.

### BREVE DESCRIPTION DES DESSINS

La présente invention sera mieux comprise à la lecture d'un exemple détaillé de réalisation en référence à figure unique annexée, fournie à titre d'exemple non limitatif et représentant une vue en coupe transversale d'un tuyau réalisé conformément à l'invention.

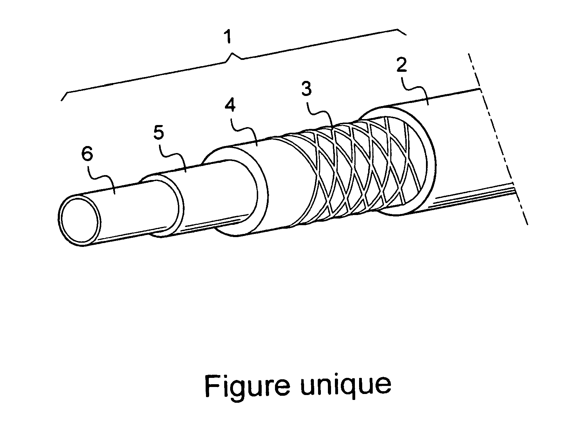

En se reportant à la figure 1 on voit représenté un tuyau 1 comportant une couche de recouvrement 2, une couche de renfort 3 et des couches intermédiaire 4, de liaison 5 et intérieure 6. Dans cette figure l'épaisseur de certaines couches a volontairement été élargie de manière à permettre la représentation des couches du tuyau 1 et faciliter la compréhension du texte.

Dans l'exemple de réalisation de la figure 1 le tuyau comporte cinq couches, toutefois, dans un mode de réalisation simplifié, le tuyau 1 ne pourra comporter que la couche intermédiaire 4, la couche de liaison 5 et la couche intérieure 6.

La couche de recouvrement 2 est réalisée majoritairement en polychlorure de vinyle (PVC), l'épaisseur de cette couche de recouvrement 2 est déterminée en fonction de la souplesse et la résistance requise pour les applications auxquelles le tuyau 1 sera destiné.

La couche de renfort 3 est rendue nécessaire pour obtenir des performances de tenue en pression élevées permettant de conférer au tuyau une grande résistance à l'éclatement ou encore aux déformations. La couche de renfort 3 peut être d'origine textile (polyester, polyamide, aramide, fibre de verre, rayon...) ou métallique (acier, inox...). Le renfort, tel que précité peut présenter différentes structures tels que le guipage, tressage ou tricotage.

La couche intermédiaire 4 est réalisée majoritairement en polychlorure de vinyle (PVC), l'épaisseur de cette couche intermédiaire 4 est déterminée en fonction de la souplesse et la résistance requise pour les applications auxquelles le tuyau 1 sera destiné. Cette couche intermédiaire 4 crée une interface de part et d'autre de la couche de renfort 3 menant à un processus d'adhésion classique, connu et maîtrisé.

Avantageusement la couche intermédiaire 4 est réalisée à partir d'un mélange PVC et polyuréthane (PU) de manière à favoriser l'adhérence sur la couche de liaison 5. Avantageusement la proportion de PU dans le mélange est comprise entre 0% et 10%.

La couche de liaison 5 est une couche de polyuréthane thermoplastique (TPU). L'utilisation d'une couche de liaison 5 en TPU permet d'assurer la cohésion des couches intermédiaire 4 en PVC et intérieure 6 en résine thermoplastique fluorée. De manière avantageuse cette couche de liaison 5 a une épaisseur comprise entre 30 et 300µm, et de préférence de l'ordre de 80 à 200 µm cette plage correspondant à un bon compromis entre le coût matière et le risque de rupture de la couche de liaison 5 notamment lors de la phase de co-extrusion.

La force d'adhésion entre la couche de liaison 5 et la couche intérieure 6 autorise une épaisseur réduite pour la réalisation de la couche intérieure 6 comprise entre 100 et 500µm. En deçà de cette valeur de 100µm la demanderesse a constaté non pas une perte d'adhérence entre les couches de liaison 5 et intérieure 6 mais des instabilités dans la couche intérieure 6 dues au processus de fabrication du tuyau.

Pour permettre une coextrusion de l'ensemble des couches 4, 5 et 6 du tuyau 1, la couche intérieure 6 est réalisée à partir d'une résine thermoplastique fluorée dont la température de fusion est sensiblement inférieure à la température de dégradation du PVC.

De manière avantageuse la résine thermoplastique fluorée est choisie dans le groupe des copolymères du polyfluorure de vinylidène (PVFD). Ce groupe présente un nombre étendu de grades permettant de satisfaire à diverses applications du tuyau, par ailleurs certains grades ont un point de fusion inférieure à la température de dégradation du PVC et permettent le transport d'eau potable ainsi qu'une bonne résistance chimique, proche de celle du PTFE, notamment face à certains désinfectants agressifs tels que le dioxyde de chlore ou l'acide peracétique.

En effectuant des tests la demanderesse a mis en évidence l'efficacité de différents copolymères du PVDF pour la réalisation de la couche intérieure 6.

Avantageusement les copolymères seront choisis parmi les produits suivants :
- copolymère de PVDF commercialisés par la société DUPONT DE NEMOURS sous les grades TEFZEL 750 et TEFZEL 200,
- copolymère de PVDF commercialisés par la société ARKEMA sous la dénomination KYNAR FLEX et notamment les grades KYNAR FLEX 2850-04 et KYNAR FLEX 2750-10E,
- copolymère de PVDF commercialisés par la société ARKEMA sous la dénomination KYNAR ADX et notamment le grade KYNAR ADX 2250-05 qui comporte un groupe fonctionnel favorisant l'adhérence,
- copolymère de PVDF commercialisés par la société SOLVAY sous la dénomination SOLEF de la série 3000,
- copolymère de PVDF commercialisés par la société DYNEON sous le grade THV et qui sont des terpolymères de vinylidène, et notamment le THV 510 ESD et le THVP 2030 G.

La structure et les matériaux du tuyau tels que précités permettent de réaliser ce tuyau de manière continu en co-extrudant simultanément les trois couches.

Ainsi constitué le tuyau présente une très bonne résistance chimique et permet un niveau de migration extrêmement faible ainsi que des propriétés organoleptiques de haut niveau. La coextrusion permet de former un ensemble cohésif nécessaire à la conception d'un tuyau renforcé. La structure du tuyau 1 avec les couches de recouvrement 2 et de renfort 3 assure en outre une grande résistance mécanique du tuyau.

Bien entendu, d'autres caractéristiques de l'invention auraient également pu être envisagées sans pour autant sortir du cadre de l'invention définie par les revendications ci-après. Notamment la structure du tuyau, en fonction des applications, comprendra une ou plusieurs couches supplémentaires.

## Revendications

1. Tuyau flexible en matière plastique notamment pour le transport d'eau potable ou d'un fluide alimentaire **caractérisé en ce qu'**il comprend au moins trois couches dont une couche intermédiaire 4 comportant majoritairement du polychlorure de vinyle (PVC), une couche de liaison 5 en polyuréthane thermoplastique (TPU) et une couche intérieure 6, ladite couche intérieure 6 étant une couche de résine thermoplastique fluorée d'une épaisseur comprise entre 100 et 500µm.

2. Tuyau flexible en matière plastique selon la revendication 1 dans lequel l'épaisseur de la couche intérieure 6 est de l'ordre de 150µm.

3. Tuyau flexible en matière plastique selon l'une ou l'autre des revendications 1 et 2 dans lequel la couche intérieure 6 a une température de fusion inférieure à la température de dégradation du polychlorure de vinyle (PVC).

4. Tuyau flexible en matière plastique selon l'une quelconque des revendications 1 à 3 dans lequel la résine thermoplastique fluorée est choisie dans le groupe des copolymères du polyfluorure de vinylidène (PVFD).

5. Tuyau flexible en matière plastique selon l'une quelconque des revendications précédentes dans lequel la couche de liaison 5 a une épaisseur comprise entre 30 et 300µm.

6. Tuyau flexible en matière plastique selon l'une quelconque des revendications précédentes comportant une couche de renfort 3 guipée, tressée ou tricotée.

7. Tuyau flexible en matière plastique selon l'une quelconque des revendications précédentes comportant une couche de recouvrement 2.

8. Tuyau flexible en matière plastique selon l'une quelconque des revendications précédentes dans lequel les couches intermédiaire 4, de liaison 5 et intérieure 6 sont co-extrudées.

## Claims

1. A flexible plastics material hose in particular for transporting potable water or a food fluid, the hose being **characterized in that** it comprises at least three layers including an intermediate layer 4 made for the most part out of polyvinyl chloride (PVC), a bonding layer 5 of thermoplastic polyurethane (TPU), and an inner layer 6, said inner layer 6 being a layer of fluorinated thermoplastic resin having thickness lying in the range 100 µm to 500 µm.

2. A flexible plastics material hose according to claim 1, wherein the thickness of the inner layer 6 is about 150 µm.

3. A flexible plastics material hose according to claim 1 or claim 2, wherein the inner layer 6 has a melting temperature lower than the degradation temperature of the polyvinyl chloride (PVC).

4. A flexible plastics material hose according to any one of claims 1 to 3, wherein the fluorinated thermoplastic resin is selected from the group comprising copolymers of polyvinylidene fluoride (PVDF).

5. A flexible plastics material hose according to any preceding claim, wherein the bonding layer 5 is of thickness lying in the range 30 µm to 300 µm.

6. A flexible plastics material hose according to any preceding claim, including a reinforcing layer 3 that is wrapped, braided, or knitted.

7. A flexible plastics material hose according to any preceding claim, including a covering layer 2.

8. A flexible plastics material hose according to any preceding claim, wherein the intermediate layer 4, the bonding layer 5, and the inner layer 6 are co-extruded.

## Patentansprüche

1. Flexibler Plastikschlauch, insbesondere für den Transport von Trinkwasser oder flüssigen Nahrungsmitteln, **dadurch gekennzeichnet, dass** er mindestens drei Schichten umfasst, darunter eine Zwischenschicht (4), die mehrheitlich Polyvinylchlorid (PVC) umfasst, eine Verbindungsschicht (5) aus thermoplastischem Polyurethan (TPU) und eine Innenschicht (6), wobei die Innenschicht (6) eine thermoplastische Fluorharz-Schicht mit einer Dicke zwischen 100 und 500 µm ist.

2. Flexibler Plastikschlauch nach Anspruch 1, wobei die Dicke der Innenschicht (6) in der Größenordnung von 150 µm liegt.

3. Flexibler Plastikschlauch nach Anspruch 1 oder 2, wobei die Innenschicht (6) eine Schmelztemperatur hat, die unter der Zersetzungstemperatur des Polyvinylchlorids (PVC) liegt.

4. Flexibler Plastikschlauch nach einem der Ansprüche 1 bis 3, wobei das thermoplastische Fluorharz aus der Gruppe der Copolymere des Polyvinylidenfluorids (PVDF) ausgewählt ist.

5. Flexibler Plastikschlauch nach einem der vorhergehenden Ansprüche, wobei die Verbindungsschicht (5) eine Dicke zwischen 30 und 300 µm hat.

6. Flexibler Plastikschlauch nach einem der vorhergehenden Ansprüche, umfassend eine umsponnene, umflochtene oder gewirkte Verstärkungsschicht (3).

7. Flexibler Plastikschlauch nach einem der vorhergehenden Ansprüche, umfassend eine Deckschicht (2).

8. Flexibler Plastikschlauch nach einem der vorhergehenden Ansprüche, wobei die Zwischenschicht (4), die Verbindungsschicht (5) und die Innenschicht (6) koextrudiert sind.
